# EUROPÄISCHE PATENTSCHRIFT

(11) **EP 1 425 564 B1**
(45) Veröffentlichungstag und Bekanntmachung des Hinweises auf die Patenterteilung: **20.04.2011**
(21) Anmeldenummer: 01274069.2
(22) Anmeldetag: 12.09.2001
(51) Int. Cl.: G01M 7/02

(54) **VERFAHREN UND VORRICHTUNG ZUR DIAGNOSTIK VON EIGENSCHWINGUNGEN EINES MECHATRONISCHEN SYSTEMS**
METHOD AND DEVICE FOR THE DIAGNOSIS OF RESONANT VIBRATIONS IN A MECHATRONIC SYSTEM
PROCEDE ET DISPOSITIF DE DIAGNOSTIC DES VIBRATIONS RESONANTES D'UN SYSTEME MECATRONIQUE

(43) Veröffentlichungstag der Anmeldung: 09.06.2004
(73) Patentinhaber: SIEMENS AKTIENGESELLSCHAFT, 80333 München (DE)
(72) Erfinder: FLÖCK, Thomas, 91086 Aurachtal (DE); HAMANN, Jens, 90765 Fürth (DE)
(86) Internationale Anmeldenummer: PCT/DE2001/003503
(87) Internationale Veröffentlichungsnummer: WO 2003/027627

(56) Entgegenhaltungen:
- EP-A- 0 427 146
- DE-A- 2 718 790
- US-A- 3 323 352
- US-A- 3 355 933
- US-A- 5 602 759
- US-A- 5 724 893
- PATENT ABSTRACTS OF JAPAN vol. 010, no. 284 (P-501), 26. September 1986 (1986-09-26) & JP 61 105438 A (NIPPON DENSO CO LTD;OTHERS: 01), 23. Mai 1986 (1986-05-23)

## Beschreibung

Die Erfindung bezieht sich auf ein Verfahren zur Diagnostik von Eigenschwingungen einer Werkzeug-, Verpackungs- und sonstigen Produktionsmaschine, z. B. in Form eines Roboters, im Folgenden zusammenfassend kurz als Maschine oder System bezeichnet. Diese Systeme bestehen in der Regel aus einer Vielzahl von Maschinenelementen einschließlich der Antriebe, die beim Betrieb des Systems jede für sich unerwünschte Schwingungen ausführen. Jede dieser Schwingungen resultiert aus einer Kombination von Zwangsschwingungen, die beispielsweise durch äußere Kräfte oder Unwuchten verursacht werden sowie aus Eigenschwingungen, die auftreten, wenn eine oder mehrere Resonanzen der Maschine angeregt werden. Diese Schwingungen verschlechtern die Qualität des mit dem System gefertigten Produkts, so dass Möglichkeiten gesucht werden, sie weitestgehend zu reduzieren.

Die Berechnung und Visualisierung dieser Schwingungen gewinnt daher zusehends an Bedeutung. Dies betrifft insbesondere den Problemkreis der Schwingungsdiagnostik. Darunter wird im Wesentlichen der Befund verstanden, der die Maschinenelemente der genannten komplexen Systeme bezüglich ihrer Wirkung auf das dynamische Verhalten der Gesamtanlage beschreibt.

Zweck der Schwingungsdiagnostik ist es, dem Konstrukteur Maschine der Eingangs genannten Art deren Schwingungsverhalten möglichst augenscheinlich zu machen, so dass er Maßnahmen ergreifen kann, durch konstruktive Mittel und/oder Auswahl der Materialien schwingungsdämpfend einzugreifen.

Zur Diagnose der Eigenschwingungen eines Systems müssen diese angeregt werden. Bekannte Verfahren, z. B. wie in der US 3,323,352, der US 3,355,933 oder der DE 27 18 790 A1 offenbart, verwenden dazu systemfremde Schwingungserreger, sogenannte translatorische Shaker, die an verschiedenen Punkten eines Starrkörpers eines mechatronischen Systems angebracht werden. Über diese Shaker werden Schwingungen unterschiedlicher Frequenz in den Starrkörper eingeprägt. An verschiedenen Stellen des Starrkörpers, insbesondere an dessen Eckpunkten, werden dann mit Hilfe von Sensoren, zum Beispiel mittels Wegmesssystemen, Beschleunigungsaufnehmern, Druckmessern, etc., Eigenschwingungen detektiert.

Aus den gemessenen Werten lässt sich ein mathematisches Modell vom Schwingungsverhalten des Gesamtsystems bilden. Da die Systemkomponenten jedoch alle miteinander verbunden sind, ergibt sich ein System von verkoppelten Differenzialgleichungen, die mittels der Modalanalyse, das heißt mittels einer algorithmischen mathematischen Entkopplung in skalare Gleichungen überführt werden, so dass für jeden Mode einer Eigenschwingung die Eigenfrequenz, die Dämpfung und die Schwingungsform angegeben werden kann.

Nach diesen Gleichungen lässt sich dann ein Modell des mechatronischen Systems simulieren und beispielsweise mittels eines einfachen Drahtmodells visualisieren. Solche Drahtmodelle sind Stand der Technik. Sie konstituieren sich durch Eckpunkte, an denen üblicherweise Sensoren derart angebracht werden, dass eine maximale Informationsausbeute erhalten wird. Der Konstrukteur bekommt damit eine Einsicht in die Systemdynamik und kann durch Modifikation der nun bekannten Schwingungsparameter schwingungsdämpfende konstruktive Maßnahmen ergreifen.

Das oben beschriebene Verfahren zur Erzeugung der Eigenschwingungen mittels systemfremden Shakern hat den Nachteil, dass die Antriebe und ihre Teilkomponenten nicht in die Schwingungsdiagnostik und in die Simulation mit einbezogen werden.

Handelsübliche Softwarepakete zur Modalanalyse identifizieren und stellen Schwingungsformen derart dar, dass entweder die translatorischen oder die rotatorischen Freiheitsgrade angesprochen werden. Eine simultane Visualisierung beider Arten von Freiheitsgraden wird in der Praxis dadurch erreicht, dass die rotatorischen Freiheitsgrade so mit in die ganzheitliche Visualisierung einbezogen werden können, dass mittels Starrkörperbewegungen bezüglich eines fixen Punktes rotatorische Schwingungsformen animiert werden. Jedoch berücksichtigt dieser Ansatz naturgemäß nicht die stets vorhandenen Nachgiebigkeiten zwischen mechanischer Struktur und Antrieben.

Aufgabe der Erfindung ist es deshalb, ein Verfahren zur Diagnostik von Eigenschwingungen einer Maschine der Eingangs genannten Art aufzuzeigen, bei dem die Gesamtheit der Systemkomponenten einschließlich der Antriebe einbezogen werden kann.

Diese Aufgabe wird durch ein Verfahren zur Diagnostik von Eigenschwingungen gelöst, wie es in Anspruch 1 definiert ist. Es wird also kein systemfremder Shaker verwendet und auch nicht mehr benötigt, da dessen Aufgabe von den Antrieben übernommen wird. Durch die Verwendung der Antriebe als zusätzliche rotatorische Shaker können die elektromechanischen Eigenschaften der Antriebe mit in die ganzheitliche Modellbildung einfließen und so die o. g. Nachgiebigkeiten zwischen mechanischer Struktur und Antrieben besser erfasst werden.

Nach einer vorteilhaften Ausbildung des Verfahrens wird dem Antrieb, der beispielsweise mit einer konstanten Drehzahl läuft, ein weißes Rauschen überlagert. Mit dem weißen Rauschen werden die Eigenschwingungen des Systems angeregt.

Die Eigenschwingungen des Systems lassen sich nach einer weiteren vorteilhaften Ausbildung des Verfahrens auch dadurch anregen, dass der Drehzahl, mit der der Antrieb läuft, sinusförmige Schwingungen verschiedener Frequenz überlagert werden. Dieses Verfahren ist herkömmlich als "Wobbeln" bekannt.

Besonders vorteilhaft ist, dass sich bei dem beschriebenen Verfahren die Eigenschwingungen mittels der systemeigenen Sensoren, wie zum Beispiel der Wegmesssysteme, Beschleunigungssensoren, Drehzahlgeber, Druckmesssysteme, etc., bestimmen lassen. Damit kann die Schwingungsdiagnose völlig autark, d. h, mit systemeigenen Mitteln durchgeführt werden, soweit die numerische Steuerung der jeweiligen Maschine über ein entsprechendes Hard- und/oder Software-Modul verfügt.

Nach einer weiteren vorteilhaften Ausbildung der Erfindung lässt sich das Verfahren dadurch verbessern, dass zusätzliche Sensoren, wie zum Beispiel Beschleunigungsaufnehmer an der Maschine angebracht werden. Diese zusätzlichen Sensoren können entweder bei Bedarf angebracht werden oder ständig an der Maschine verbleiben. Wenn es beispielsweise vorgesehen ist, während der Lebensdauer der Maschine wiederholte Schwingungsdiagnosen durchzuführen, beispielsweise weil man annimmt, dass sich die Eigenschwingungen durch Materialermüdungen und/oder aus anderen Gründen verändern, könnten die zusätzlichen Sensoren zur Vereinfachung dieser weiteren Diagnosen auch am System verbleiben.

Das Verfahren lässt sich vorteilhaft mit einer Vorrichtung zur Diagnostik von Eigenschwingungen eines numerisch gesteuerten Systems der Eingangs genannten Art durchführen wie sie im unabhängigen Vorrichtungsanspruch definiert ist.

Eine vorteilhafte Ausbildung der Vorrichtung besteht darin, dass das Modul als externes Modul an die numerische Steuerung anschließbar ist. Die numerische Steuerung würde in diesem Fall lediglich die Anschlüsse für das Modul aufweisen, so dass das Modul bedarfsweise, d. h. bei Durchführung einer Schwingungsdiagnostik, an die numerische Steuerung angeschlossen werden könnte. Damit ließen sich Aufwand und Kosten der numerischen Steuerung gering halten. Die Schwingungsdiagnostik könnte dann "on order" von einem Kundendienstfachmann, beispielsweise vom Kundendienst des Lieferanten der numerischen Steuerung, durchgeführt werden. Der Kunde würde in diesem Fall nicht einmal die Kosten für das Modul aufwenden müssen. Das getrennte Modul könnte aber auch so universell gestaltet werden, dass es für eine Vielzahl von Maschinen und numerischen Steuerungen geeignet ist, so dass mit einem einzigen Modul verschiedene Systeme diagnostiziert werden könnten.

Das Modul könnte aber auch integraler Bestandteil der numerischen Steuerung selbst sein. Dies würde die wiederholte Schwingungsdiagnostik eines Systems vereinfachen.

Ein Ausführungsbeispiel der Erfindung wird anhand der Zeichnung näher erläutert. Dabei zeigen
- FIG 1:: Das Drahtmodell einer Werkzeugmaschine
- FIG 2, 3 und 4:: Verschiedene Schwingungsmodi

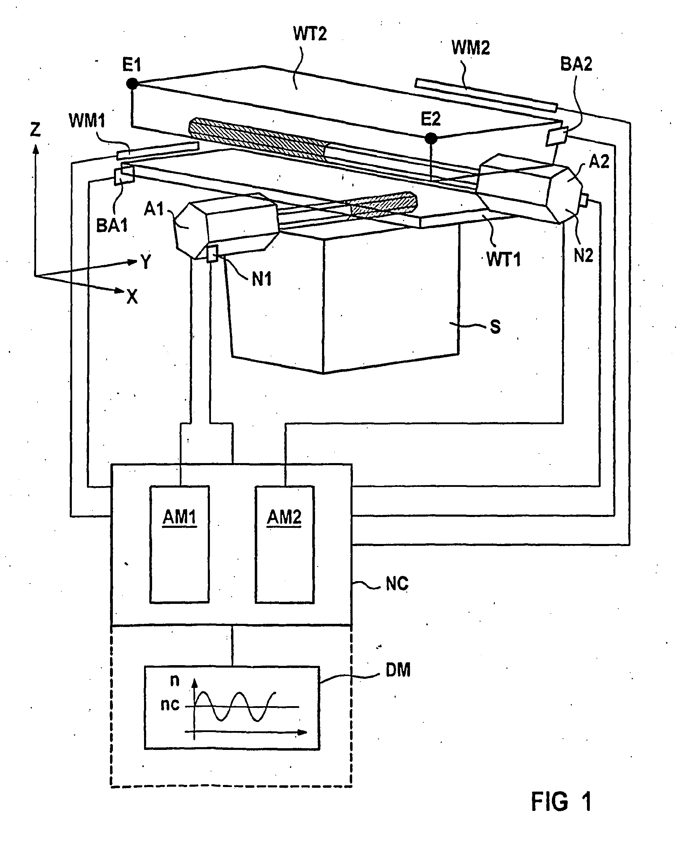

FIG 1 zeigt das Drahtmodell einer Werkzeugmaschine, mit dem Sockel S, einen auf dem Sockel angeordneten Werkzeugtisch, der aus dem in Y-Richtung verfahrbaren Tischelement WT1 und dem in X-Richtung verfahrbaren Tischelement WT2 besteht. Die Tischelemente WT1 und WT2 werden über die Antriebe A1 und A2 und die zugehörigen Spindeln verfahren. Die Farbgrenze der Farben schwarz und grau der Spindeln kennzeichnen die Verbindungsstellen zwischen dem jeweiligen Tischelement WT1, WT2 und den Spindeln.

Die asymmetrische Darstellung entsteht durch die Generierung des Drahtmodells, welches durch die Eckpunkte der zu betrachtenden Bauteile, bzw. Komponenten definiert ist. Diese Eckpunkte sind im vorliegenden Beispiel gerade so angeordnet, dass sie asymmetrisch sind. Die Form des Drahtmodells soll durch einfachste Grundelemente möglichst gut die vorliegende Geometrie widerspiegeln. Außerdem werden die Stellen als Eckpunkte, wie z. B. E1 und E2, ausgewählt, die auch möglichst aussagekräftige Messinformationen liefern.

An den Komponenten der durch das Drahtmodell dargestellten Werkzeugmaschine sind Wegmesssysteme WM1 und WM2 als Sensoren angebracht. Dieses Wegmesssysteme gehören in der Regel zu den systemeigenen Komponenten der tatsächlichen Werkzeugmaschine. Soweit für die Diagnose der Eigenschwingungen zusätzliche Wegmesssysteme benötigt werden, können diese selbstverständlich vorgesehen werden. Als weitere Sensoren zur Diagnose der Eigenschwingungen sind in der Figur Beschleunigungsaufnehmer BA1 und BA2 symbolisch dargestellt. Selbstverständlich können weitere zusätzliche Sensoren, wie zum Beispiel Druckmesssensoren, etc., verwendet werden. Als weitere Sensoren zur Diagnose der Eigenschwingungen werden die ebenfalls systembedingt vorhandenen Drehzahlgeber N1, N2. der Antriebe A1, A2 verwendet.

Die Werkzeugmaschine wird über eine numerische Steuerung NC gesteuert. Diese weist für jeden Antrieb ein Achsmodul AM1, AM2 auf. Zusammen mit den Achsmodulen AM1, AM2 regelt die numerische Steuerung NC die Antriebe A1, A2 in herkömmlicher Weise.

Zur Schwingungsdiagnostik ist die numerische Steuerung NC mit einem Diagnosemodul DM verbunden. Das Diagnosemodul DM kann ein eigenständige Modul sein, das auf einer Datenverarbeitungsanlage, beispielsweise einem Laptop implementiert ist. Es kann aber auch - wie durch die gestrichelte Linie angedeutet - integraler Bestandteil der numerischen Steuerung NC sein.

Zur Diagnose der Eigenschwingungen werden die Antriebe A1, A2 mit konstanter Drehzahl nc, wie im Diagramm des Blockschaltbildes des Diagnosemoduls DM dargestellt, betrieben. Dieser konstanten Drehzahl nc wird ein weißes Rauschen - in der Figur durch die Sinus-Kurve symbolisiert - überlagert. Das weiße Rauschen beinhaltet alle Frequenzanteile und somit auch die, die das System zu Eigenschwingungen anregen. Die konstante Drehzahl nc könnte aber auch mit unterschiedlichen Frequenzen überlagert werden, wobei diese unterschiedlichen Frequenzen nacheinander durchlaufen (gewobbelt) werden.

Die Eigenschwingungen des mechatronischen Systems werden damit zuverlässig angeregt und können über die Wegmesssysteme WM1, WM2, die Beschleunigungsaufnehmer BA1, BA2 und die Drehzahlgeber N1, N2 detektiert werden.

Da die Eigenschwingungen über die Antriebe A1, A2 angeregt werden, werden auch die Komponenten dieser Antriebe, die ja ebenfalls zum Schwingungsverhalten des Gesamtsystems beitragen, mit berücksichtigt. Damit erfasst die Schwingungsdiagnose auch die stets vorhandenen Nachgiebigkeiten zwischen der Maschinenstruktur und den Antrieben.

Zur Detektion von Kippschwingungen ist es sinnvoll, Sensoren soweit möglich auch an den Eckpunkten der Starrkörper vorzusehen. Mit Sensoren an den Eckpunkten E1 und E2 lassen sich beispielsweise Kippschwingungen des Werkzeugtisches WT2 um die y-Achse detektieren. Entsprechendes gilt für (hier nicht gezeigte) Sensoren an weiteren Eckpunkten, z.B. an den Eckpunkten des Werkzeugtisches WT1.

Mit den aus der Schwingungsdiagnose gewonnenen Ergebnissen kann dann das Schwingungsverhalten der Werkzeugmaschine zum Beispiel anhand eines Drahtmodells visualisiert werden. Mit Hilfe der Modalanalyse wird die Animation der rotatorischen Schwingungsmodi im Raum aus der Kombination einer dreidimensionalen, linearisierten Translation mit einer eindimensionalen Rotation um eine einzelne Achse gewonnen. Die Schwingungsdiagnostik wird dadurch erheblich erleichtert, dass sämtliche am jeweiligen Schwingungsmodus beteiligten Maschinenelemente auf ihre Wirkung hin untersucht und dem Kunden vorgeführt werden können. Dies bietet einen nicht zu unterschätzenden Vorteil für die Akzeptanz der gemessenen und evtl. der an die Messungen angepassten simulierten Ergebnisse, da nun eindeutigere Aussagen getroffen werden können, wie groß der Einfluss der Maschinenstruktur und der Antriebe auf die Dynamik des jeweiligen Systems ist.

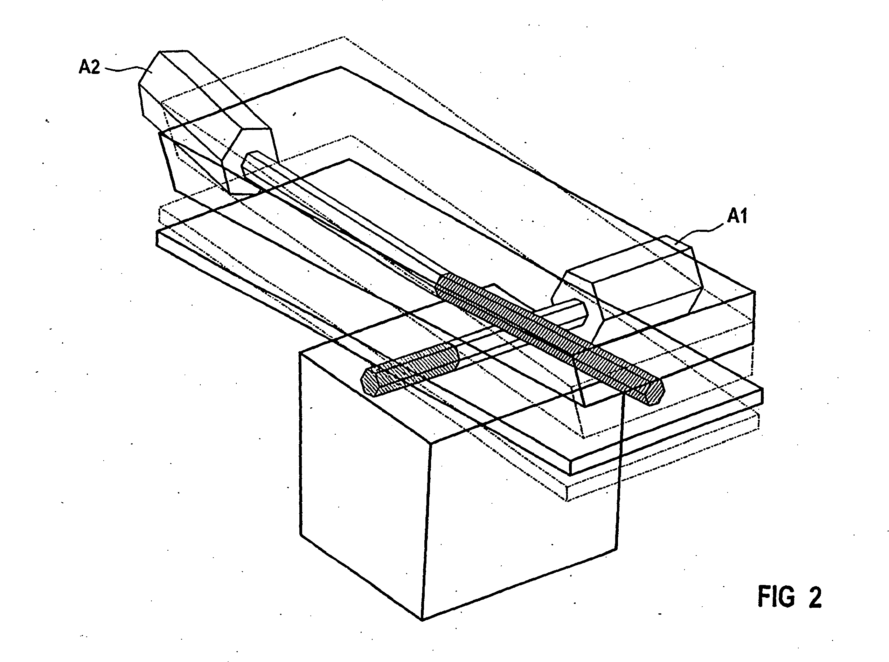

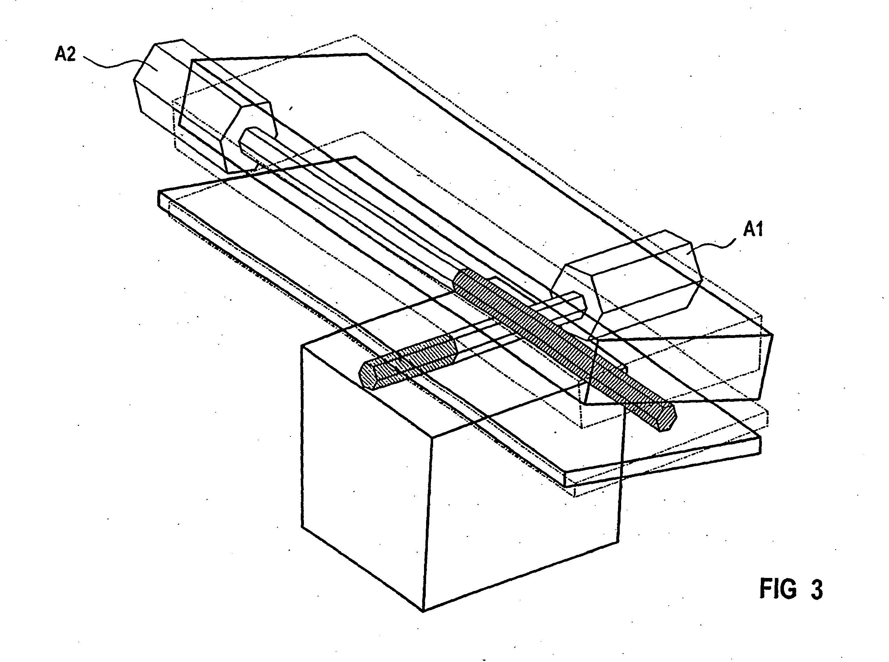

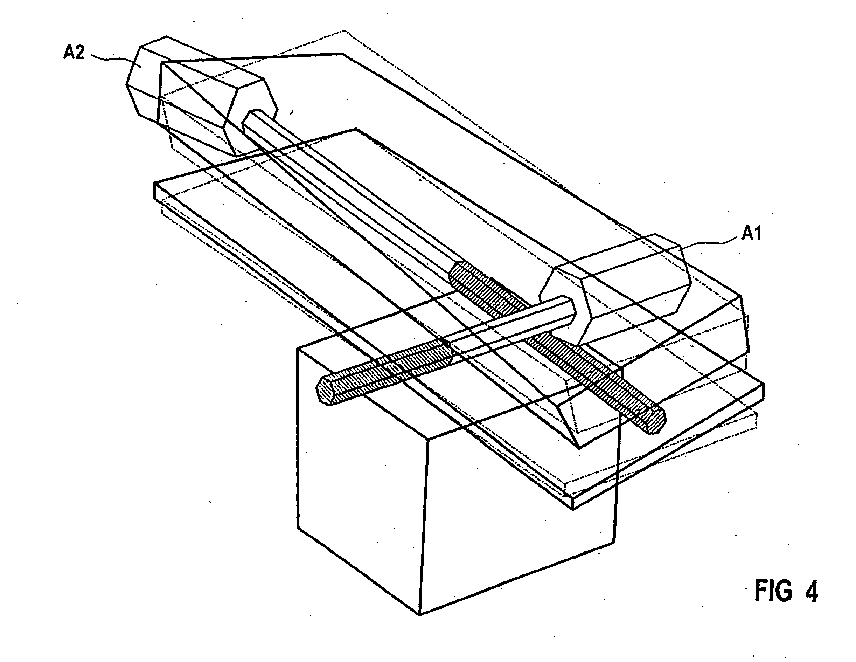

In den Figuren 2, 3 und 4 sind beispielhaft einige Schwingungsmodi bei unterschiedlichen Frequenzen gezeigt. Die Verformungen werden gestrichelt dargestellt, so dass sie visuell besser erkannt werden können und der Unterschied zum unverformten Zustand deutlicher wird. Die einzelnen Elemente der jeweiligen Figur sind aus FIG 1 bekannt. FIG 2 zeigt einen Schwingungsmode bei 56 Hertz, FIG 3 zeigt einen Schwingungsmode bei 81 Hertz und FIG 4 zeigt einen Schwingungsmode bei 106 Hertz.

Jede Schwingungsform an herkömmlichen mechatronischen Maschinen enthält sowohl translatorische als auch rotatorische Freiheitsgrade, deren getrennte Betrachtung wenig sinnvoll ist, da eine Kopplung zwischen translatorischen und rotatorischen Freiheitsgraden stets existiert. Durch die hierin beschriebene Vorgehensweise wird diese Kopplung durch die simultane Animation aller geometrischen Grundelemente, wie etwa Quader und Zylinder, die dann das Drahtmodel konstituieren, ganzheitlich aus mechatronischer Sicht berücksichtigt. Dies führt letztendlich zu verlässlichen Aussagen, welchen Einfluss jeweils rotatorische und translatorische Freiheitsgrade bei nachgiebiger Ankopplung der Antriebe an die mechanische Struktur auf die resultierende Schwingungsform ausüben.

Systemfremde Shaker, die translatorisch wirken, können ohne weiteres zum zusätzlichen Informationsgewinn in das entwickelte Modalanalysetool integriert werden.

## Patentansprüche

1. Verfahren zur Diagnostik von Eigenschwingungen einer numerisch gesteuerten Werkzeug-, Verpackungs- und sonstigen Produktionsmaschine - Maschine -, welche mindestens einen Starrkörper (WT1,WT2) umfasst, der durch mindestens einen von der Maschine umfassten, numerisch gesteuerten Antrieb (A1,A2) relativ zu einem anderen Starrkörper (S) bewegt wird, wobei die Eigenschwingungen durch den Antrieb (A1,A2) angeregt und über Sensoren (WM1, WM2, N1, N2, BA1, BA2) detektiert werden.

2. Verfahren nach Anspruch 1, wobei der Antriebsdrehzahl der Antriebe (A1,A2) zur Erregung der Eigenschwingungen ein weißes Rauschen überlagert wird.

3. Verfahren nach Anspruch 1, wobei der Antriebsdrehzahl der Antriebe (A1,A2) zur Erregung der Eigenschwingungen sinusförmige Schwingungen verschiedener Frequenzen überlagert werden.

4. Verfahren nach einem der vorstehenden Ansprüche, wobei zur Detektion der Eigenschwingungen systemeigene Sensoren (WM1,WM2)verwendet werden.

5. Verfahren nach einem der vorstehenden Ansprüche, wobei zur Detektion der Eigenschwingungen zusätzliche Sensoren (BA1,BA2) angebracht werden.

6. Vorrichtung zur Durchführung eines Verfahrens zur Diagnostik von Eigenschwingungen einer numerisch gesteuerten Werkzeug-, Verpackungs- und sonstigen Produktionsmaschine - Maschine -, welche mindestens einen Starrkörper (WT1, WT2) und Sensoren (WM1, WM2, N1, N2, BA1, BA2) zur Detektion von Eigenschwingungen umfasst, wobei der Starrkörper (WT1, WT2) durch mindestens einen von der Maschine umfassten, numerisch gesteuerten Antrieb (A1,A2) relativ zu einem anderen Starrkörper (S) bewegt wird, wobei die numerische Steuerung (NC) des Systems ein Hard- und/oder Software-Modul umfasst, wobei das Hard- und/oder Software-Modul Mittel zur Erregung von Eigenschwingungen des Systems durch die numerisch gesteuerten Antriebe (A1,A2), sowie Mittel zur Verarbeitung der von den Sensoren (WM1,WM2,N1,N2,BA1,BA2) des Systems detektierten Eigenschwingungen aufweist.

7. Vorrichtung nach Anspruch 6, wobei das Modul an die numerische Steuerung anschließbar ist.

8. Vorrichtung nach Anspruch 6, wobei das Modul integraler Bestandteil der numerischen Steuerung ist.

## Claims

1. Method for the diagnosis of natural vibrations of a numerically-controlled machine tool, packaging machine or other production machine comprising at least one rigid body (WT1, WT2) which is moved relative to another rigid body (S) by at least one numerically-controlled drive (A1, A2) comprised by the machine, wherein the natural vibrations are excited by the drive (A1, A2) and detected by sensors (WM1, WM2, N1, N2, BA1, BA2).

2. Method according to Claim 1, wherein the drive speed of the drives (A1, A2) for excitation of the natural vibrations is superimposed by white noise.

3. Method according to Claim 1, wherein the drive speed of the drives (A1, A2) for excitation of the natural vibrations is superimposed by sinusoidal vibrations of varying frequencies.

4. Method according to one of the preceding claims, wherein system-internal sensors (WM1, WM2) are used for detection of the natural vibrations.

5. Method according to one of the preceding claims, wherein additional sensors (BA1, BA2) are attached for detection of the natural vibrations.

6. Apparatus for carrying out a method for the diagnosis of natural vibrations of a numerically-controlled machine tool, packaging machine or other production machine comprising at least one rigid body (WT1, WT2) and sensors (WM1, WM2, N1, N2, BA1, BA2) for detection of natural vibrations, wherein the rigid body (WT1, WT2) is moved relative to another rigid body (S) by at least one numerically-controlled drive (A1, A2) comprised by the machine, wherein the numeric control (NC) of the system includes a hardware module and/or software module, wherein the hardware module and/or software module includes means for excitation of natural vibrations of the system by the numerically-controlled drives (A1, A2) as well as means for processing the natural vibrations detected by the sensors (WM1, WM2, N1, N2, BA1, BA2) of the system.

7. Apparatus according to Claim 6, wherein the module is connectable to the numeric control.

8. Apparatus according to Claim 6, wherein the module forms an integral part of the numeric control.

## Revendications

1. Procédé de diagnostic de vibrations propres d'une machine-outil, d'une machine d'emballage et d'autres machines de production à commande numérique, machine qui comprend au moins un corps (WT1, WT2) rigide, qui est mis en mouvement par rapport à un autre corps (S) rigide, par au moins un entraînement (A1, A2) à commande numérique compris par la machine, dans lequel on excite les vibrations propres par l'entraînement (A1, A2) et on les détecte par des capteurs (WM1, WM2, N1, N2, BA1, BA2).

2. Procédé suivant la revendication 1, dans lequel on superpose un bruit blanc à la vitesse de rotation des entraînements (A1, A2) pour l'excitation des vibrations propres.

3. Procédé suivant la revendication 1, dans lequel on superpose des vibrations sinusoïdales de fréquence différente à la vitesse de rotation des entraînements (A1, A2) pour l'excitation des vibrations propres.

4. Procédé suivant l'une des revendications précédentes, dans lequel on utilise des capteurs (WM1, WM2) propres au système pour la détection des vibrations propres.

5. Procédé suivant l'une des revendications précédentes, dans lequel on met des capteurs (BA1, BA2) supplémentaires pour la détection des vibrations propres.

6. Dispositif pour effectuer un procédé de diagnostic de vibrations propres d'une machine-outil, d'une machine d'emballage et d'autres machines de production à commande numérique, machine qui comprend au moins un corps (WT1, WT2) rigide et des capteurs (WM1, WM2, N1, N2, BA1, BA2) de détection de vibrations propres, le corps (WT1, WT2) rigide étant mis en mouvement par rapport à un autre corps (S) rigide par au moins un entraînement (A1, A2) à commande numérique compris par la machine, la commande (NC) numérique du système comprenant un module matériel et/ou logiciel, le module matériel et/ou logiciel comportant des moyens d'excitation de vibrations propres du système par les entraînements (A1, A2) à commande numérique, ainsi que des moyens de traitement des vibrations propres détectées par les capteurs (WM1, WM2, N1, N2, BA1, BA2) du système.

7. Dispositif suivant la revendication 6, dans lequel le module peut être relié à la commande numérique.

8. Dispositif suivant la revendication 6, dans lequel le module fait partie intégrante de la commande numérique.
